# EUROPEAN PATENT APPLICATION

(11) **EP 4 566 949 A1**
(43) Date of publication of application: **11.06.2025**
(21) Application number: 23215250.4
(22) Date of filing: 08.12.2023
(51) Int. Cl.: B64D 37/10, B64D 37/30, B64D 37/32, F17C 1/14, F17C 1/16

(54) **FUEL TANK FOR AN AIRCRAFT, AND AIRCRAFT WITH FUEL TANK**

(71) Applicant: Airbus Operations GmbH, 21129 Hamburg (DE)
(72) Inventor: Siemann, Martin, 21129 Hamburg (DE)

(57) **Abstract**

Disclosed is a fuel tank 1 for an aircraft 100. The fuel tank 1 comprises an inner hull 10 bordering an inner tank space S to be filled with a fuel, and an outer hull 20 encasing the inner hull 10, wherein a vacuum insulation layer V is arranged between the inner hull 10 and the outer hull 20. Moreover, the fuel tank 1 comprises an energy absorbing layer 30 which is at least partially attached to the outer hull 20 and spaced away from the inner hull 10.

Further disclosed is an aircraft 100 comprising such fuel tank 1, and at least one engine 2 to be fed therefrom.

## Description

The present invention concerns a fuel tank for an aircraft, which fuel tank in particular may be a liquid hydrogen tank. The invention further concerns an aircraft comprising such fuel tank.

Aircraft typically comprise one or more fuel tank/s containing a fuel to be supplied to the aircraft's one or more propulsion engines and possibly, if installed, to an auxiliary power unit such as, e.g., a turboshaft engine and/or a fuel cell etc. Different positions are known for the tanks, depending on a respective type and design of the aircraft.

Conventionally, the respective fuel may be an aviation gasoline or a jet fuel, for instance. In order to achieve a considerable emission reduction, alternative propulsion systems for aircraft have been researched for. In this respect, hydrogen/electric aircraft engines, any propulsion engine, which includes piston engines, turbine engines of any architecture, and fuel cell powered electrical propulsion motors have emerged as a promising possibility, for instance. In particular, turbo fans and fuel cells/ electric engines respectively powered by hydrogen are being developed as aircraft engines. In either case, considerable space (volume) is needed, in the aircraft, for the hydrogen storage even in the liquid state thereof.

The fuel may be carried in one or several tanks which in particular may be positioned in the wings or in a fuselage section of the aircraft.

It is an object of the present invention to provide an improved fuel tank for an aircraft. It is a further object to provide an improved aircraft comprising such fuel tank.

The object is achieved with a tank according to claim 1, and with an aircraft according to claim 9. Advantageous embodiments are disclosed in the dependent claims, the description, and the drawings.

A fuel tank according to the present invention is devised as a fuel tank of an aircraft. It may in particular be a liquid hydrogen tank, i.e., configured to contain liquefied hydrogen (LH2).

The fuel tank, referred to herein also shortly as "tank" only, comprises an inner hull which borders (and thus encloses) an inner tank space to be filled with a fuel. The fuel tank further comprises an outer hull encasing the inner hull. Therein, a vacuum insulation layer is formed between the inner hull and the outer hull. As is to be understood, such vacuum insulation layer is a hollow extending between the outer hull and the inner hull, the hollow being devoid of matter. In particular, at least a rough vacuum, at least a medium vacuum or at least a high vacuum may be established in the vacuum insulation layer.

In this document, the term "insulation" always refers to thermal insulation.

The fuel tank according to the present invention further comprises an energy absorbing layer which is spaced away from (and thus not in contact with) the inner hull. The energy absorbing layer is at least partially attached to the outer hull and/or at least partially integrated into the outer hull.

The energy absorbing layer thus serves to absorb crash energy, which improves safety of the fuel tank and an aircraft containing it. Therein, due to the energy absorbing layer being spaced from the inner hull, heat bridges are avoided, such that heat conduction is suppressed. Accordingly, the insulation property of the double-walled fuel tank is maintained.

The outer hull and/or the inner hull may be at least partially made of metal, in particular aluminium and/or an aluminium alloy, and/or of plastic, preferably a thermoplastic material, in particular a fibre reinforced polymer.

The energy absorbing layer may be at least partially arranged on an outer surface of the outer hull.

According to preferred embodiments, the energy absorbing layer is (additionally or alternatively) at least partially arranged on an inner surface of the outer hull.

In such embodiments, the space between the inner hull and the outer hull thus is used to integrate the shock absorption layer. Accordingly, an advantageous crashworthiness according to which the tank absorbs a part of a total crash energy can be achieved without or with at most a restricted enlargement of the fuel tank as compared to a conventional one.

In embodiments in which the energy absorbing layer is at least partially integrated into the outer hull as mentioned above, a sandwich structure may be conjointly formed by the energy absorbing layer and the outer hull. For instance, the outer hull itself may (at least locally) comprise at least two layers with at least a portion of the energy absorbing layer arranged in-between. In particular, the outer hull and the energy absorbing layer may thus form a laminate, a core of which is the energy absorbing layer.

According to advantageous embodiments, the energy absorbing layer comprises a porous structure such as a foam and/or a lattice. Such materials have a high specific and homogeneous energy absorption. Moreover, the energy absorbing layer comprising such material contains voids which may allow maintaining the insulation properties, and it further can be accomplished to be lightweight.

The foam and/or lattice in such embodiments may in particular be at least partially metallic.

In particular, the energy absorbing layer may preferably be at least partially made of a stacked array of two or more foam layers having different respective densities. For instance, the energy absorbing layer can be configured as a density graded structure. It may thus imitate cellular solids, in particular a pomelo's peel, which are known to provide high specific energy absorption.

Preferably, the energy absorbing layer is configured to undergo progressive crushing and/or progressive structural failure in a crash event.

According to preferred embodiments of a fuel tank according to the present invention, the energy absorbing layer has an irregular thickness and/or an irregular material composition.

In particular, the energy absorbing layer may include a first region and a second region, wherein in the first region, the energy absorbing layer has another thickness than in the second region and/or comprises a material which is absent in the second region.

Additionally or alternatively, if the energy absorbing layer comprises a lattice as mentioned above, the lattice may have an irregular geometric structure, such as due to an irregular pattern, in particular nonuniform distances of adjacent braces of the lattice.

By including an energy absorbing layer with one or more of said irregularities, the tank devised to absorb a part of a total crash energy can be adapted to respective loading directions as defined in typical crash conditions for aircrafts, in particular for large aircrafts, such as 9g in a forward direction of the respective aircraft and 6g in a downward direction thereof: In order to not exceed such design load multiples, an appropriate stroke length can be required, which may be realised by the respective thickness of the energy absorbing layer in the respective region.

For instance, the shock absorption layer may be composed of a plurality of blocks (zones) having different thicknesses and/or properties. Thereby, a modularity is provided, and respectively desired local crash characteristics can be conveniently accomplished.

In particular in embodiments where the energy absorbing layer is at least partially made of a stacked array of two or more foam layers, as mentioned above, said irregularity in thickness may conveniently be realised by an irregular thickness of at least one of the foam layers, and/or by different numbers of foam layers present in respective regions (such as in the first and in the second region mentioned above) of the shock absorption layer. More specifically, in said first region, the stacked array may comprise a first number of one or more foam layer/s, and in said second region, the stacked array may comprise a second number of foam layers, the first number being different from the second number.

Analogously, the irregularity of the material composition may be realised by including foam layers having different characteristics in the respective regions.

In particular, in at least a part of a nose portion of the fuel tank, the energy absorbing layer may be thicker and/or comprise a different material than in one or various other portion/s of the fuel tank, such as in an aft portion of the fuel tank and/or in a lateral portion of the fuel tank and/or in an upper portion of the fuel tank, and/or in a bottom portion of the tank. Therein, the nose portion is to be understood as a portion, of the fuel tank, which is arranged or devised to be arranged in the aircraft so as to direct in a forward direction thereof. Analogously, the aft portion, the lateral portion, the upper portion, and the bottom portion respectively are to be understood as a portion, of the fuel tank, which is arranged or devised to be arranged in the aircraft so as to direct in an aft direction of the aircraft, in a lateral direction (thus, to face sidewards), to face upwards, or to face downwards, respectively.

An aircraft according to the present invention comprises at least one fuel tank according to an embodiment of the present invention, and at least one engine configured to be fed with fuel supplied from the fuel tank.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure.

Shown are schematically in
- Fig. 1:: a fuel tank according to an exemplary embodiment of the present invention in a cross section; and
- Fig. 2:: an aircraft according to an exemplary embodiment of the present invention.

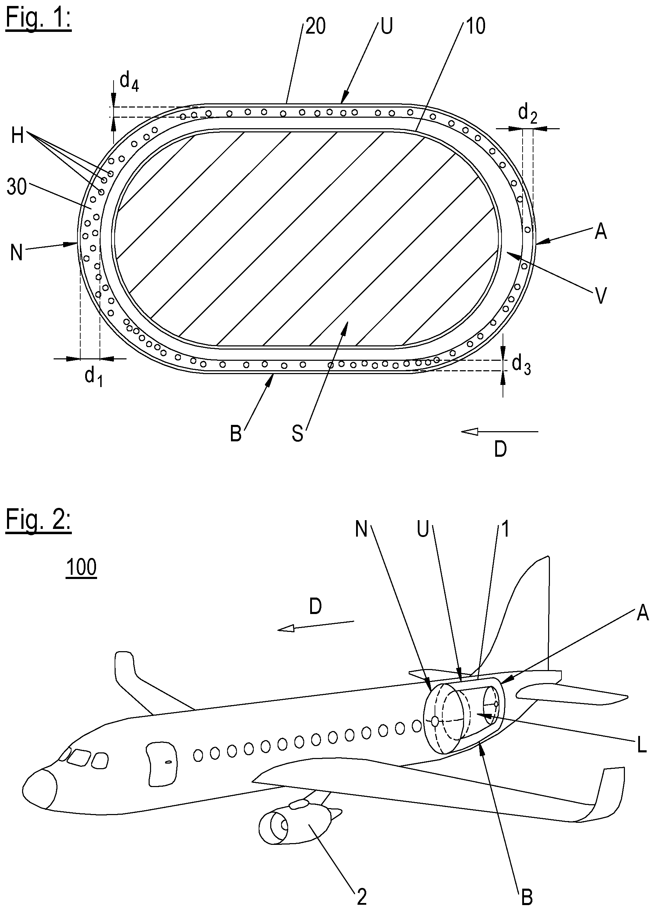

In Figure 1, a structure of an exemplary fuel tank 1 according to the present invention is illustrated in a longitudinal cross section. Therein, typical tank components (such an extraction line, a heater pipe and/or a refuel pipe), which do not specifically serve to explain the present invention, are omitted.

The fuel tank 1 comprises an inner hull 10 enclosing an inner tank space S to be filled with fuel, and an outer hull 20 encasing the inner hull, with a vacuum insulation layer V in-between, the vacuum insulation layer V being a hollow space which is devoid of matter, thus forming at least a rough vacuum, at least a medium vacuum, or at least a high vacuum. The vacuum insulation layer V advantageously reduces heat transfer from the outside into the inner tank space S and thus keeps the fuel cool. In particular, the fuel tank 1 may be a pressure vessel for containing, as said fuel, e.g. liquefied hydrogen.

The fuel tank 1 further comprises an energy absorbing layer 30 and thereby integrates crashworthiness functionality. As seen in Figure 1, the energy absorbing layer 30 does not contact the inner hull 10 but is spaced away therefrom. Thereby, heat bridges are avoided, such that the insulating property of the vacuum insulation layer V is maintained.

The energy absorbing layer 30 advantageously has a porous structure comprising a plurality of voids H. For instance, it may be at least partially made of a foam and/or of a lattice. In particular, the energy absorbing layer 30 may preferably be at least partially made of a stacked array of foam layers having different densities (not shown), and/or of a lattice having an irregularly patterned structure (not shown), which may provide for respective different properties of diverse regions of the energy absorbing layer.

Due to the voids H comprised by the porous structure, the energy absorbing layer 30 may be particularly lightweight, and the insulating property of the vacuum insulation layer V may be maintained.

In the embodiment shown in Figure 1, the energy absorbing layer 30 is arranged on an inner surface of the outer hull 20. Accordingly, the space between the inner hull 10 and the outer hull 20, which is devised for providing thermal insulation, is further utilised for facilitating shock absorption. Thereby, the fuel tank 1 integrates crashworthiness while nevertheless avoiding a disadvantageously large tank size.

As further seen in Figure 1, the energy absorbing layer 30 shown has an irregular thickness: Indeed, in the exemplary embodiment depicted, in a nose portion N, the energy absorbing layer 30 has a thickness d₁ which is larger than a thickness d₃ the energy absorbing layer 30 has in a bottom portion B. Moreover, in the exemplary case depicted, said thickness d₃ is larger than a thickness d₂ the energy absorbing layer 30 has in an aft portion A and also larger than a thickness d₄ the energy absorbing layer 30 has in an upper portion U. Additionally (or alternatively in an embodiment not depicted), the energy absorbing layer 30 may include different materials in at least two of said portions (not shown).

Therein, said nose, aft, upper, lateral, and bottom portions N, A, U, L, B are defined by a devised arrangement of the fuel tank 1 in an aircraft 100 (as illustrated in Figure 2), in which the tank 1 is configured to feed at least one engine 2.

Indeed, such arranged, the nose portion N of the fuel tank 1 directs in a forward direction of the aircraft (thus, in a designated direction D of flight), and the aft portion A of the tank directs in an opposite direction (thus, towards an aft portion of the aircraft). Moreover, in the aircraft's orientation designated for regular flight (as shown in Figure 2), the lateral portion L of the fuel tank 1 faces sidewards, the upper portion U thereof faces upwards, and the bottom portion of the tank 1 faces downwards.

By means of the different thicknesses of the energy absorbing layer 30 in said portions as seen in Figure 1, typical crash conditions for aircrafts are taken into account, and locally desired crash characteristics can be controlled, such that the safety of the aircraft is improved.

Disclosed is a fuel tank 1 for an aircraft 100. The fuel tank 1 comprises an inner hull 10 bordering an inner tank space S to be filled with a fuel, and an outer hull 20 encasing the inner hull 10, wherein a vacuum insulation layer V is arranged between the inner hull 10 and the outer hull 20. Moreover, the fuel tank 1 comprises an energy absorbing layer 30 which is at least partially attached to the outer hull 20 and spaced away from the inner hull 10.

Further disclosed is an aircraft 100 comprising such fuel tank 1, and at least one engine 2 to be fed therefrom.

### Reference signs

- 1: fuel tank
- 2: engine

- 10: inner hull
- 20: outer hull
- 30: energy absorbing layer

- 100: aircraft

- d₁: thickness of nose portion
- d₂: thickness of aft portion
- d₃: thickness of bottom portion
- d₄: thickness of upper portion

- A: aft portion
- B: bottom portion
- D: designated direction of flight
- H: void
- L: lateral portion
- N: nose portion
- S: inner tank space
- U: upper portion
- V: vacuum insulation layer

## Claims

1. Fuel tank (1) for an aircraft (100), the fuel tank comprising an inner hull (10) bordering an inner tank space (S) to be filled with a fuel, and an outer hull (20) encasing the inner hull (10) with a vacuum insulation layer (V) in-between,
the fuel tank (1) further comprising an energy absorbing layer (30) which is at least partially attached to and/or integrated into the outer hull (20), and which is spaced away from the inner hull (10).

2. Fuel tank according to claim 1, wherein the energy absorbing layer (30) is at least partially arranged on an inner surface and/or on an outer surface of the outer hull (20).

3. Fuel tank according to one of the preceding claims, wherein the energy absorbing layer comprises at least one foam and/or at least one lattice.

4. Fuel tank according to one of the preceding claims, wherein the energy absorbing layer (30) is at least partially made of a stacked array of foam layers having different densities.

5. Fuel tank according to one of the preceding claims, wherein the energy absorbing layer (30) includes a first region (N, A, L, U, B) and a second region (N, A, L, U, B), wherein in the first region, the energy absorbing layer has another thickness (d₁, d₂, d₃, d₄) and/or comprises another material than in the second region.

6. Fuel tank according to one of the preceding claims, wherein in at least a part of a tank`s nose portion (N) arranged or devised to be arranged so as to direct in a forward direction of the aircraft, the energy absorbing layer is thicker and/or comprises a different material than
- in a tank`s aft portion (A) arranged or devised to be arranged so as to direct in an aft direction of the aircraft, and/or
- in a tank`s lateral portion (L) arranged or devised to be arranged so as to face sidewards within the aircraft, and/or
- in a tank`s upper portion (U) arranged or devised to be arranged so as to face upwards within the aircraft, and/or
- in a tank`s bottom portion (B) arranged or devised to be arranged so as to face downwards within the aircraft.

7. Fuel tank according to one of the preceding claims, wherein the energy absorbing layer is configured to undergo, in a crash event, progressive crushing and/or progressive structural failure.

8. Fuel tank according to one of the preceding claims, which is configured as a pressure vessel for containing liquid hydrogen.

9. Aircraft (100) comprising one or more fuel tank/s (1) respectively according to one of the preceding claims, and at least one engine (2) configured to be fed with fuel supplied from the fuel tank (1).
